# EUROPEAN PATENT SPECIFICATION

(11) **EP 2 856 294 B1**
(45) Date of publication and mention of the grant of the patent: **07.09.2022**
(21) Application number: 13731433.2
(22) Date of filing: 31.05.2013
(51) Int. Cl.: G06F 3/044

(54) **MULTI-TOUCH SENSING PANEL AND CORRESPONDING PRODUCTION METHOD**
MULTI-TOUCH SENSOR UND GEEIGNETE PRODUKTIONSMETHODE
PROCÉDÉ DE PRODUCTION DE PANNEAU DE DÉTECTION TACTILE MULTIPOINT ET PANNEAU DE DÉTECTION TACTILE MULTIPOINT

(30) Priority: 31.05.2012 GB 201209737
(43) Date of publication of application: 08.04.2015
(73) Proprietor: Zytronic Displays Limited, Blaydon on Tyne, Tyne and Wear NE21 5NJ (GB)
(72) Inventor: MORRISON, Andrew, Gateshead Tyne and Wear NE9 5DD (GB); CALDWELL, Christopher Graham John, Northumberland NE42 5PX (GB); CAMBRIDGE, Mark, Durham DH4 7TT (GB)
(74) Representative: Secerna LLP
(86) International application number: PCT/GB2013/051448
(87) International publication number: WO 2013/179051

(56) References cited:
- GB-A- 1 352 557
- GB-A- 1 352 557
- US-A1- 2012 105 370
- US-A1- 2012 111 479

## Description

### TECHNICAL FIELD

The present invention relates to methods for producing non-planar multi-touch sensing panels.

### BACKGROUND

Personal computing devices equipped with touch sensing displays are well known and widely used. Such displays allow a user to control a device by "touch inputs", i.e. by touching a touch sensing panel typically positioned over a display screen. Recent advances in so-called "multi-touch" technology have allowed the development of multi-touch devices, whereby a touch sensing display of a device can derive control information from multiple simultaneous touches by a user. Multi-touch technology increases the amount of control a user has over a device and increases the usefulness and desirability of the device.

Development of multi-touch technology has been mainly limited to comparatively small-scale personal computing devices such as smart-phones and tablet computers. However, there is recognition that providing multi-touch touch sensing displays in other areas could lead to improved devices of other types.

Conventional multi-touch display devices use a so-called "mutual capacitance" technique whereby the level of charge transferred from a first set of conductors (i.e. electrodes) to a second set of conductors by virtue of capacitive coupling is monitored. A reduction in this charge transfer indicates a user touch. Other techniques can be used to detect user touch, such as so-called "self-capacitance" techniques whereby a change in capacitance of isolated conductors arranged in a grid pattern is monitored. However, self-capacitance based techniques perform poorly when trying to distinguish between multiple simultaneous touches and are therefore not appropriate for multi-touch applications.

A conventional mutual-capacitance based multi-touch display device comprises a touch-sensing panel overlaid on a display screen. The touch sensing panel includes a first array layer comprising a first set of conducting elements and a second array layer comprising a second set of conducting elements. The first and second array layers are separated by a number of insulating layers and positioned under a transparent protective substrate usually made from glass. The first and second set of conducting elements are made from indium tin oxide (ITO). ITO when deposited in thin enough layers becomes transparent and is generally considered to be the best material for use in touch sensing panels that are positioned over display screens.

The ITO conductors of the first array layer are arranged to cross the ITO conductors of the second array layer at a number of crossing points. Transfer of charge due to capacitive coupling between the ITO conductors of the first and second layers at the various crossing points is monitored. A user touch (e.g. a user bringing a finger or a capacitive stylus into close proximity or physical contact with the touch sensing panel) is detected when a drop in the level of charge transferred by capacitive coupling is detected at a crossing point. This is due to charge that would otherwise have been transferred from one conductor layer to the other at the crossing point instead being transferred into the user (or stylus).

To produce the ITO conductors a layer of ITO is deposited on a substrate. To deposit an ITO layer on a substrate a so-called "sputtering" technique is used whereby ITO particles are projected at the substrate forming a thin layer. To form individual conductors, the ITO layer is then etched using photolithography.

Sputtering is an expensive and time consuming process and must be performed as precisely as possible to reduce variances in the thickness of the deposited ITO layer. Similarly photolithography is an intricate process which requires a high degree of precision when aligning with the substrate on which the ITO conductors are formed. Accordingly, it is very difficult to produce ITO conductors on anything other than uniformly flat substrates. This limits the use of multi-touch touch sensing display devices to devices that have a flat or substantially flat display screen profile. As ITO is generally considered the only suitable material from which to make the conductors of multi-touch sensing devices due to its transparency, efforts to address this drawback have focussed on adapting the ITO conductor manufacturing process.

US2012/105370A1, see in particular section titled "eSheet Projected Capacitive Sensor", deals with, capacitive touch sensors and corresponding production methods wherein thin wire based touch sensing electrodes are used.

US2012/111479A1 discloses a lamination process based on direct deep drawing technology which is suitable to produce non-planar touch sensing panels.

### STATEMENT OF INVENTION

In accordance with a first aspect of the invention there is provided a method of producing a non-planar multi-touch sensing panel, said panel comprising a plurality of electrically isolated conductors crossing each other at a plurality of intersection points. The method comprises: forming the plurality of electrically isolated conductors by laying down insulated conducting wire on an adhesive layer, said insulated conducting wire comprising an insulating coating; forming a flexible conductor array sheet from the insulated conducting wires laid down on the adhesive layer, and laminating the flexible conductor array sheet onto a non-planar protective substrate using a rolling technique thereby forming the non-planar multi-touch sensing panel.

In accordance with conventional techniques multi-touch sensing panels are made with conductors formed from ITO. As described above, in order to form ITO conductors an ITO layer is firstly deposited on a substrate by a sputtering process and then individual conductors are formed using photolithography. Using this technique it is difficult to form individual conductors on anything other than a planar (i.e. substantially flat) substrate. Moreover, ITO, once deposited, is brittle and typically cannot withstand any sort of bending or general deformation without fracturing. It will be understood therefore that it is very difficult to manufacture a 20 multi-touch sensing panel that is non-planar (i.e. a multi-touch sensing panel that includes at least a portion that is not substantially flat).

In accordance with this aspect of the present invention, a method is provided which enables non-planar multi-touch sensing panels to be manufactured in such a way that overcomes the difficulty of making multi-touch sensing panels using conventional methods. In particular, by making the electrically isolated conductors from insulated conducting wire, a conductor array sheet can be made which contains the conductors and is substantially flexible. This conductor array sheet, due to its flexibility, can be readily laminated to a protective substrate (for example a glass substrate) that need not be planar (i.e. need not be substantially flat) in configuration. Moreover, unlike ITO based techniques, as the conductors comprise insulated conducting wire, the conductors can be laid over each other directly without a need for further intervening isolating layers between the conductors. This means that there is no requirement to add further layers to the conductor array sheet which would otherwise increase the thickness, decreases the flexibility and reduce the optical transparency of the conductor array sheet. Moreover, insulating coating on the conducting wires can serve to protect the conductors, particularly if they are laid down on the adhesive layer in a planar configuration and then manipulated into a non-planar configuration when being laminated onto the nonplanar protective substrate.

In some embodiments the adhesive sheet is positioned on a first flexible substrate. In some embodiments the flexible conductor array sheet is formed by positioning a second flexible substrate on the plurality of electrically isolated conductors.

In some embodiments the plurality of electrically isolated conductors comprise a first group of X-plane conductors and a second group of Y-plane conductors, each intersection point being where an X-plane conductor crosses a Y-plane conductor and the step of laying down the insulated conducting wire comprises firstly laying down the conducting wire for one or the X-plane conductors or the Y-plane conductors, then secondly laying down the conducting wire for the other of the X-plane conductors and Y-plane conductors. In accordance with these embodiments the conductors can be laid down on the adhesive sheet as a single layer and in a single manufacturing step. This results in a far simpler construction than conventional multi-touch sensing panels which require conductors in the X-plane to be deposited on an entirely separate insulating layer to the conductors in the Y-plane.

In some embodiments the laying down of the insulated conducting wire is by a direct wire plotting process.

According to the invention the flexible conductor array sheet is laminated onto the non-planar protective substrate using a rolling technique. In some embodiments the rolling technique comprises passing the non-planar protective substrate and the flexible conductor array sheet between a first and second pinch roller, wherein the first and second pinch rollers are heated.

In some embodiments either one or both of the non-planar protective substrate and the flexible conductor array sheet include a pre-applied adhesive to a surface on which the lamination occurs. In some embodiments a gap between the first and second pinch rollers is adjustable to accommodate for different thickness of the non-planar protective substrate and the flexible conductor array sheet.

In some embodiments the non-planar protective substrate is made from one of glass, polycarbonate or acrylic.

In some embodiments the conducting wire comprises a metallic conductor material. In some embodiments the conducting wire of the electrically isolated conductors comprises any one of copper wire, nickel wire or tungsten wire.

In some embodiments the conducting wire of the electrically isolated conductors is of diameter 8µm to 18µm.

In some embodiments the conducting wire comprises tungsten wire of a diameter of 5µm to 10µm.

In some embodiments the insulating coating of the electrically isolated conductors comprises a polyurethane, polyester, polyesterimide or polyimide coating. Various further aspects and features of the invention are defined in the claims.

### BRIEF DESCRIPTION OF THE DRAWINGS

Embodiments of the present invention will now be described by way of example only with reference to the accompanying drawings where like parts are provided with corresponding reference numerals and in which:
Figure 1 provides a schematic diagram of a multi-touch sensing panel arrangement;
Figure 2a provides a schematic diagram of a conductor array layer;
Figure 2b provides a schematic diagram showing a view of a multi-touch sensing panel;
Figure 2c provides a schematic diagram showing an example of a conductor array pattern;
Figure 3 provides a schematic diagram of a cross section of an insulated conducting wire;
Figure 4 provides a schematic diagram of a multi-touch sensing panel;
Figure 5 provides a schematic diagram illustrating a conductor array manufacturing technique for manufacturing conductor arrays in accordance with embodiments of the invention;
Figure 6 provides a schematic diagram illustrating a touch detector unit arranged in accordance with embodiments of the invention;
Figure 7a provides a schematic diagram of a flexible conductor array sheet arranged in accordance with embodiments of the invention;
Figure 7b provides a schematic diagram showing a number of example configurations of non-planar multi-touch sensing panels in accordance with embodiments of the invention;
Figure 8 provides a schematic diagram showing an example of a rolling technique for manufacturing a non-planar multi-touch sensing panel in accordance with embodiments of the invention;
Figure 9 provides a schematic diagram of a non-planar multi-touch sensing panel arranged in accordance with embodiments of the invention, and
Figure 10 provides a schematic diagram of a non-planar multi-touch sensing panel connected to a touch detector unit arranged in accordance with embodiments of the invention.

### DETAILED DESCRIPTION

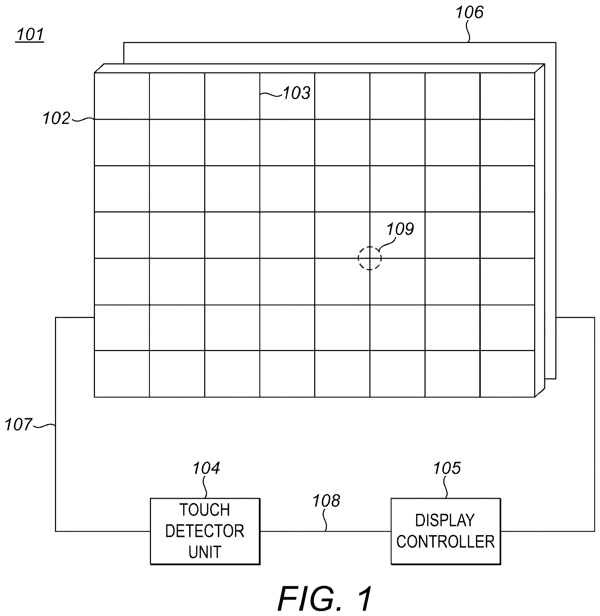

Figure 1 provides a schematic diagram of a multi-touch sensing panel arrangement 101. The multi-touch sensing panel arrangement is arranged to detect "multi-touch" input, i.e. input from a user comprising one or more touch inputs at the same time.

A multi-touch sensing panel 102 is provided which includes a conducting array layer 103 comprising a plurality of insulated conducting wires arranged into a first group of X-plane conductors and a second group of Y-plane conductors. Each conducting wire is individually insulated with an insulating coating.

Each of the insulated conducting wires from both the X-plane conductor group and the Y-plane conductor group are connected via a flexi-lead connector 107 to a touch detector unit 104. The touch detector unit 104 includes an output 108 enabling it to be connected to a display controller 105. The display controller 105 is arranged to control a display screen 106 over which the multi-touch sensing panel can be positioned. As will be understood, the display controller 105 is typically any suitable display controlling device such as a personal computer, games console, control circuitry of a television and so on. The display screen 106 is any display apparatus which can be positioned adjacent to a multi-touch sensing panel. Such display screens include LCD display screens, CRT display screens, projection based display screens and so on.

As will be understood, the multi-touch sensing panel 102, touch detector unit 104 and display screen together form a multi-touch sensing display.

The conducting array layer 103 includes a number of intersection points 109 where an insulated conducting wire from the group of X-plane conductors crosses an insulated conducting wire from the group of Y-plane conductors.

In operation the touch detector unit is arranged to sequentially generate a voltage pulse on each of the insulated conducting wires of the X-plane conductor group and at the same time monitor the voltage level on each of the insulated conducting wires of the Y-plane conductor group.

By virtue of capacitive coupling between the insulated conducting wires at the intersection points, a voltage pulse generated on a given X-plane insulated conducting wire will result in a corresponding voltage pulse on all of the Y-plane insulated conducting wires that cross the given X-plane insulated conducting wires at the various intersections. As will be understood by those skilled in the art capacitive coupling "at" an intersection point refers to capacitive coupling substantially in the vicinity of the intersection point. The size of the pulse on each Y-plane insulated conducting wires that cross the X-plane insulated conducting wire will depend on the extent of the capacitive coupling between the insulated conducting wires at the intersections.

Normally when there is no user touch (i.e. a user has not brought any part such as a user finger or capacitive stylus into close proximity or physical contact with the multi-touch sensing panel 102) the voltage pulse generated on the Y-plane insulated conducting wires will be at a given, substantially constant, level. However, if there is a user touch at an intersection point (i.e. a user bringing a part, such as a body part or suitable capacitive pointing device, into close proximity or physical contact with the multi-touch sensing panel 102), then some of the energy from the voltage pulse on the X-plane insulated conducting wire will be absorbed, by capacitive coupling, into the user part. As a result there is a reduction in the size of the voltage pulse (i.e. the energy) measured at the particular Y-plane insulated conducting wire that crosses the pulsed X-plane insulated conducting wire.

By sequentially pulsing each of the X-plane insulated conducting wires and measuring the corresponding voltage pulses on the Y-plane insulated conducting wires, the touch detector can determine at what intersection points there are user touches. The touch detector pulses the X-plane conductors and measures the corresponding pulse on the Y-plane conductors at a sufficient frequency such that simultaneous user touches (i.e. multi-touch) at any of the intersection points can be detected.

Multi-touch data, indicating where there are user touches, is then generated by the touch detector unit 104 which can then be sent, via the touch detector unit output 108, to a display controller 105 that is arranged to control a display screen 106 in accordance with multi-touch data.

For example, if the display screen 106 is displaying an image, a user might place a thumb and forefinger on the multi-touch sensing panel 102 at a position corresponding to where the image is displayed on the display screen 106. The user may then twist their hand thereby rotating the thumb and forefinger around a central point. This user input is detected by the touch detector unit 104 as described above and multi-touch data corresponding to the position and the movement of the user's thumb and forefinger generated and sent to the display controller 105. The display controller 105 may then be arranged to determine that a user touch was made on an area of the multi-touch sensing panel corresponding to an area of the display screen 106 where the image is displayed and therefore that the user has selected the image for manipulation. Further, the display controller 105 may then be arranged to change the display of the image in accordance with an operation associated with the thumb/forefinger rotation movement described above by, for example, rotating the image displayed on the display screen 106.

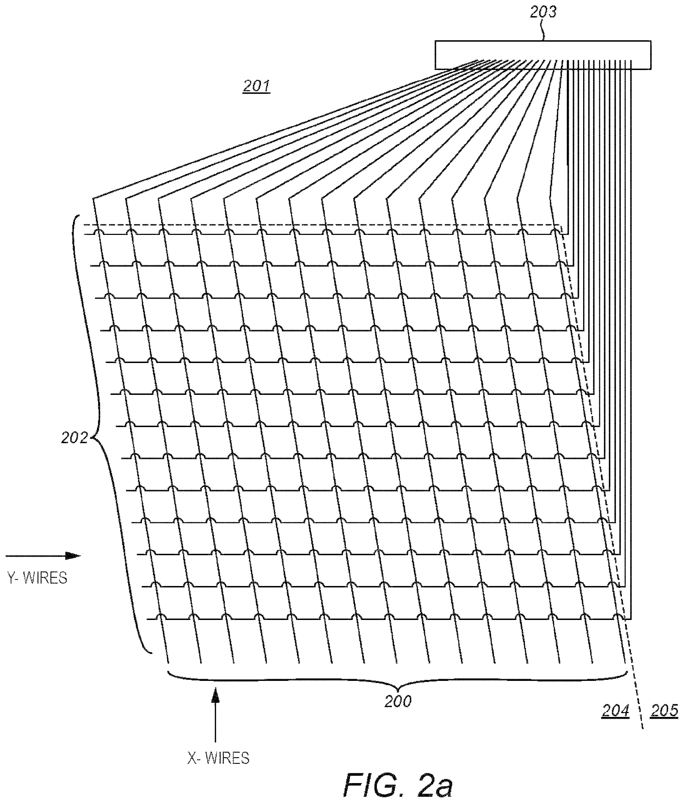

Figure 2a provides a schematic diagram of a conductor array layer 201.

As described above, the conductor array layer 201 comprises a plurality of insulated conducting wires arranged into an X-plane group of insulated conducting wires 200 and a Y-plane group of insulated conducting wires 202. Typically the insulated conducting wires of the X-plane group are arranged substantially orthogonally to the insulated conducting wires of the Y-plane group.

The insulated conducting wires terminate at a termination point 203 and are connected at this point to one or more flexi-tail connectors for electrical connection with a touch detector unit.

Typically, a first portion 204 of the conductor array 201 is positioned substantially within an area of the multi-touch sensing panel that receives touch input from a user. A second portion 205 includes signal lines connected to each insulated conducting wire leading to the termination point and is typically positioned around a periphery of the multi-touch sensing panel. Typically the insulated conducting wire forming a conductor in the conductor array and the corresponding signal line are formed from the same continuous section of insulated conducting wire.

As shown in Figure 2a, the Y-plane insulated conducting wires are laid down directly on the X-plane insulated conducting wires - i.e. there is no provision of an intervening layer between the X-plane and Y-plane insulated conducting wires for the purpose of electrically isolating the insulated conducting wires from each other. As will be understood, the provision of such a layer is unnecessary because each individual insulated conducting wire is electrically isolated from the other wires by virtue of its insulating coating.

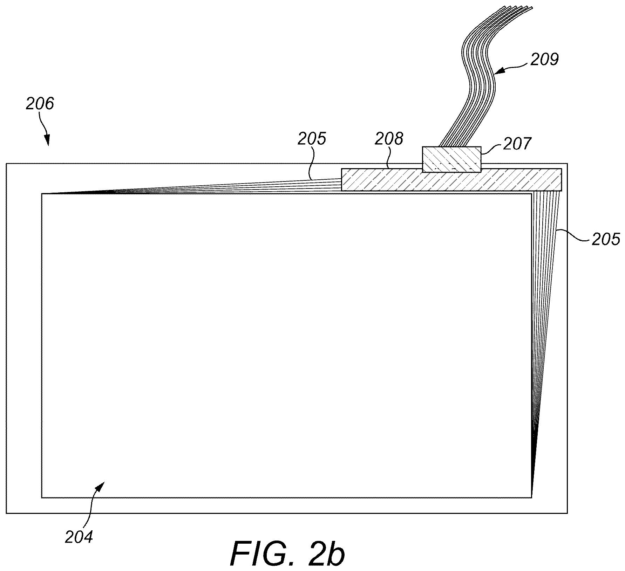

Figure 2b provides a schematic diagram providing a more detailed view of a multi-touch sensing panel 206. The multi-touch sensing panel 206 includes a conducting array layer as explained for example with reference to Figure 2a. The conducting array layer includes the first portion 204 which, as explained above, is positioned within an area of the multi-touch sensing panel 206 which receives a touch input from a user. The conducting array layer 201 also includes the second portion 205 which includes signal lines connected to each insulated conducting wire leading to the termination point. Connected to the termination point is a flexi-tail connector 207. The flexi-tail connector 207 includes a series of connecting leads 209, typically arranged in a flat parallel formation. As will be understood, each connecting lead corresponds to an insulated conducting wire of the conducting array layer. The flexi-tail connector 207 includes a connection point 208 which is secured to the multi-touch sensing panel 206 and includes a plurality of bonds which electrically connect end-points of the signal lines to end-points of the connecting leads. As will be understood, the termination point is not shown in Figure 2a as it is positioned below the connection point 208. At the other end of the flexi-tail connector 207 (not shown) a connector is provided for connecting each connecting lead with a suitable input line of the touch detector unit.

Although not shown in Figure 2b, in some examples the multi-touch sensing panel may be connected to more than one flexi-tail connector. For example, the multi-touch sensing panel may be arranged to have one flexi-tail connector for the X-plane insulated conducting wires and another flexi-tail connector for the Y- plane insulated conducting wires. In another example, the X-plane insulated conducing wires and Y-plane insulated conducing wires may be divided into subsets, and the multi-touch sensing panel is arranged such that each subset has its own flexi-tail connector.

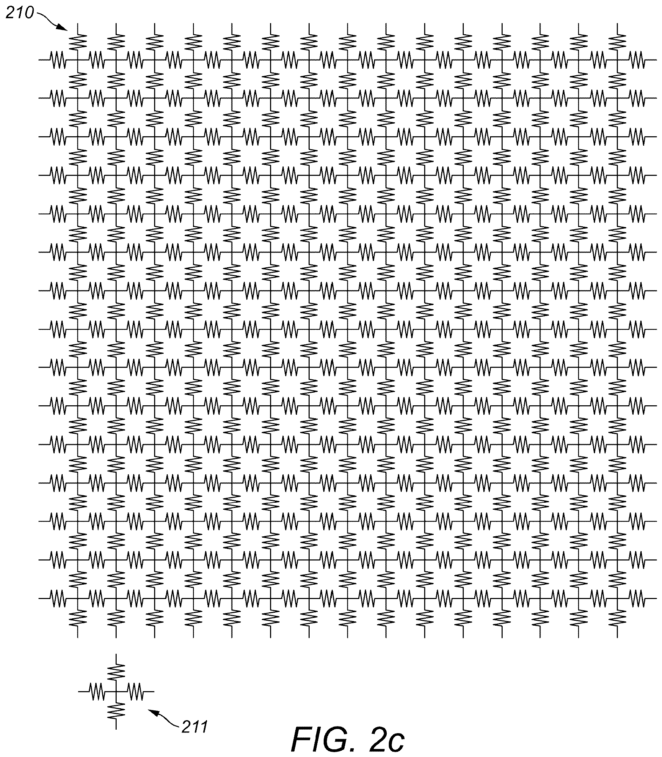

The arrangement of the insulated conducting wires shown in Figure 2a is a simple straight-line grid pattern. However, it will be understood that any suitable arrangement of X-plane and Y-plane insulated conducting wires can be used provided the requisite intersection points are provided. Figure 2c provides a schematic diagram showing an example of a conductor array pattern 210 comprising X-plane and Y-plane insulated conducting wires that is more complex than the simple straight-line grid pattern shown in Figure 2a. As will be understood, the conductor array 210 comprises a number of repeating cells 211. During the design process, individual cells such as that shown in Figure 2c can be designed and then repeated to produce the required size of conductor array. Typically each repeating cell comprises one or more intersection points.

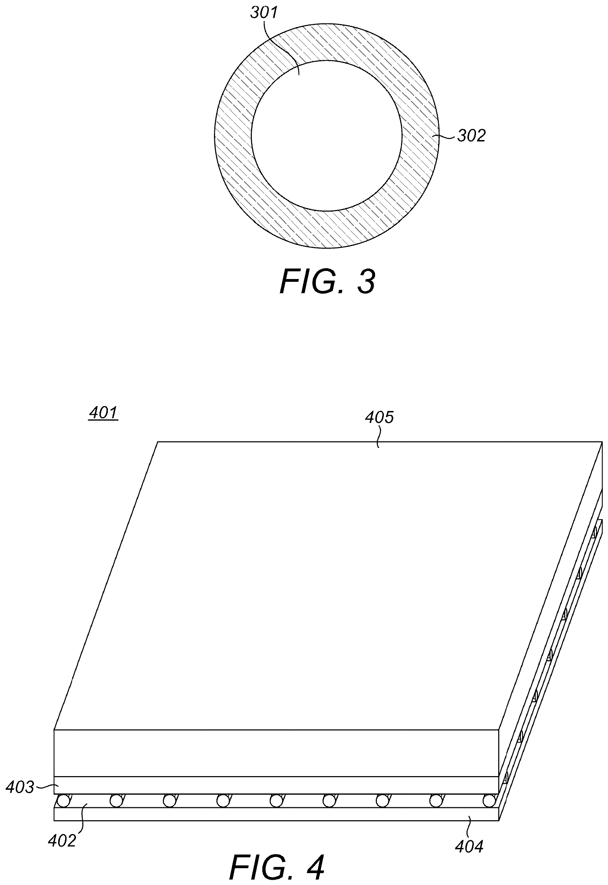

Figure 3 provides a schematic diagram of a cross section of an insulated conducting wire. The insulated conducting wire comprises a conductive core 301 comprising, for example, a metallic conductor such as copper, nickel, tungsten and an insulating coating 302 comprising an insulating material such as polyurethane, polyester, polyesterimide or polyimide. Any suitable material can be used for the insulating coating providing it is flexible enough to withstand the manufacturing process and can be melted off at a suitable temperature to allow the conductive core to be bonded to the flexi-tail connector. In some examples a dye is added to the insulating material to reduce the reflectivity of the insulated conducting wires when they are in situ in a multi-touch sensing panel. This can have the effect of reducing the perceptibility of the insulated conducting wires, particularly in certain conditions such as under direct sunlight. As set out below, in some examples a lubricant is applied to the surface of the insulated conducting wires to reduce a likelihood of breakages when it is being fixed to a surface.

The conductive core need not be made from a single metallic conductor. In some examples the conductive core may comprise a first metallic conductor plated with a second metallic conductor. For example the conductive core may comprise a gold-plated tungsten core.

The dimensions of the insulated conducting wire, the conductor and coating of which it is comprised can be any suitable dimensions determined, for example, by the desire to reduce perceptibility of the conductor array layer balanced with other factors such as manufacturing constraints (e.g. if the insulated conducting wires are too fine then they are prone to break during manufacture). In some embodiments, the insulated conducting wire comprises a metallic core of diameter between 8µm to 18µm with an insulating coating of thickness 3µm to 4µm. It has been found that insulated conducting wires so arranged are small enough to provide minimised perceptibility whilst being of sufficient size to be of the required robustness during manufacturing of the multi-touch sensing panel using the manufacturing techniques described below.

In some examples, insulated conducting wires with a conductive core with a diameter towards the larger end of the range are chosen for larger sized multi-touch sensing panels to reduce a likelihood that the insulated conducting wires will snap during manufacture (larger scale multi-touch sensing panels may require longer continuous lengths of the insulated conducting wire to be laid down which increase the chance of breakage during manufacture). For example, for multi-touch sensing panels of a width near to or greater than 1000mm, an insulated conducting wire with a conductive core made from copper and with a diameter of 18µm can be used. On the other hand, in some examples where minimising the perceptibility of the appearance of the insulated conducting wires is of higher importance and where the manufacturing of the multi-touch sensing panel is less likely to lead to breakage of the insulated conducting wire (e.g. for smaller scale multi-touch sensing panels), insulated conducting wires with conductive cores of a smaller diameter are chosen. For example, insulated conducting wires with a tungsten core of a diameter of 5µm to 10µm can be used for multi-touch sensing panels with smaller dimensions (for example of a width less than 500mm) and which are part of a touch sensing display likely to be viewed closely or for a prolonged period of time by a user. In some examples, such multi-touch sensing panels with smaller dimensions can include insulated conducting wire made from copper wire with a diameter of 10µm. Typically, for ease of manufacture each insulated conducting wire will include the insulating coating 302 along its entire length. However, it will be understood that it is only necessary to provide the insulating coating on sections of the insulated conducting wire that need electrically isolating from other components of the multi-touch sensing panel.

Figure 4 provides a schematic diagram of a multi-touch sensing panel 401. The multi-touch sensing panel 401 includes a conductor array layer 402 comprising insulated conducting wires arranged, for example, as shown in Figure 2a, and positioned on an adhesive layer 403, on which the conductor array layer 402 is secured. The adhesive layer can be any suitable transparent adhesive such as pressure sensitive adhesive (PSA) or optically clear adhesive (OCA) that are known in the art. The multi-touch sensing panel 401 also includes a protective backing layer 404, comprising, for example, a polyethylene terephthalate (PET) film, and a protective substrate positioned 405 on the adhesive layer.

As will be understood, the protective substrate 405, adhesive layer 403 and the protective backing layer are all substantially transparent.

The protective substrate 405 can be made from any suitable transparent material such as polycarbonate, glass, acrylic or PET. The protective substrate 405 is typically the layer that is exposed for users to touch.

The signal lines and the termination point described above with reference to Figure 2a are not shown in the schematic diagram of the multi-touch sensing panel shown in Figure 4, however, it will be understood that these components are typically incorporated as part of the multi-touch sensing panel.

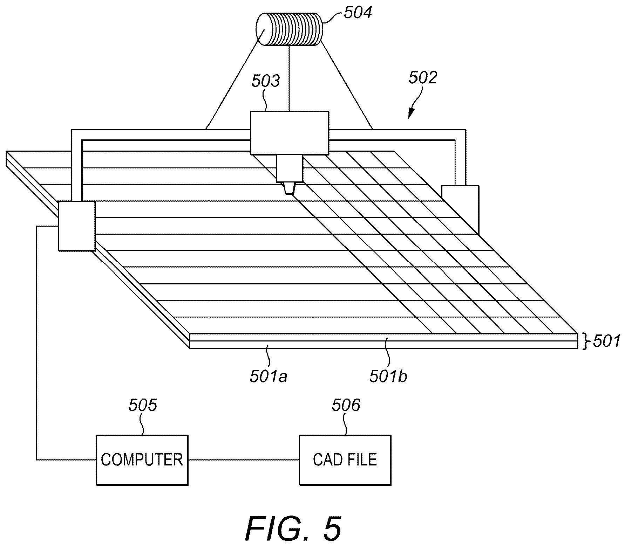

Figure 5 provides a schematic diagram illustrating a direct wire plotting technique that can be used to manufacture the conductor array layer for multi-touch sensing panels.

A base layer 501 comprising a protective substrate 501a and an adhesive layer 501b is positioned within a wire plotting apparatus 502. The plotting apparatus 502 includes a wire deploying head 503 which can move over the surface of the adhesive layer 501b laying down wire, such as the insulated conducting wires described above. As wire emerging from the wire deploying head 503 contacts adhesive of the adhesive layer 501b, it is fastened into position. A spool of wire 504 dispenses wire as it is fastened to the adhesive layer 501b by the wire deploying head 503. To create a conductor array such as the conductor array shown in Figure 2a, the spool of wire 504 feeds insulated conducting wire into the wire deploying head 503 which lays down insulated conducting wire for one of the X-group or Y-group wires, and then, on top of this, lays down insulated conducting wire for the other of the X-group or Y-group wires. In some examples a lubricant is applied to the surface of the insulated conducting wire in the spool to reduce the likelihood of breakages as the wire is deployed from the spool. Once all the insulated conducting wire has been laid down and fixed to the adhesive layer 501b, the necessary cuts are made to form each individual insulated conducting wire. The cutting can be done by hand; or can be done by fixing a cutting tool to the wire deploying head, or can be done by using any other suitable technique.

The plotting apparatus 502 is controlled by a computer 505. The computer 505 is programmed to control the plotting apparatus 502 to lay down the insulated conductor wires to form a conductor array layer as specified in a computer aided design (CAD) file 506. As will be understood, in order to change some aspect of the conductor array (for example size, shape, array pattern and so on), all that is necessary is to use a different and/or adapted CAD file.

As described above, the protective substrate 501a can be made from any suitable transparent material such as polycarbonate, glass, acrylic, PET and so on.

Once the conductor array layer has been formed on the adhesive layer 501b a protective layer is then added on top of the conductor array layer. This protective layer is typically a PET film. As will be understood, the protective substrate 501a will typically form the outer surface of the multi-touch sensing panel that is touched by the user.

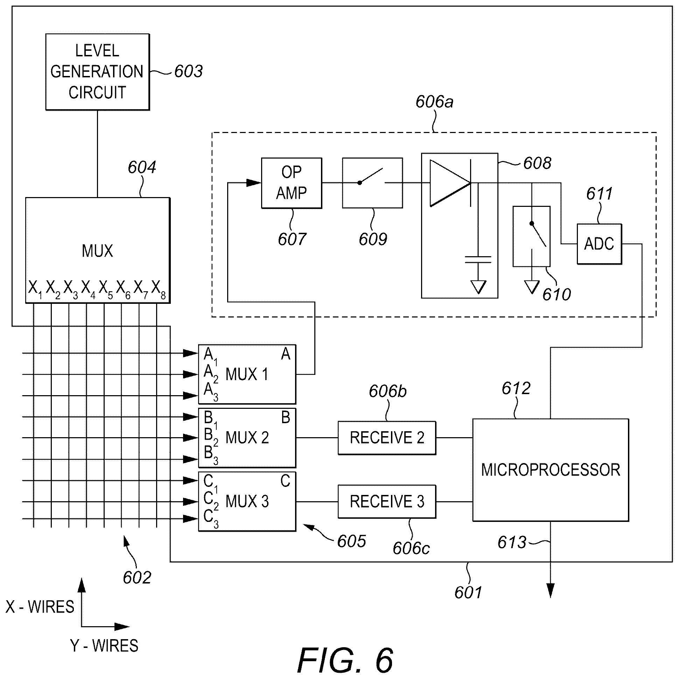

Figure 6 provides a schematic diagram illustrating components of a touch detector unit 601. The touch detector unit 601 is connected to a multi-touch sensing panel 602 comprising X-plane and Y-plane insulated conducting wires as described above via flexi-tail connector (not shown).

The touch detector unit 601 includes a level generation circuit 603 that generates a voltage pulse signal which is input to a multiplexer 604 connected, via the flexi-tail connector, to the X-plane insulated conducting wires of the multi-touch sensing panel 602. The multiplexer 604 selects one of the X-plane insulated conducting wires and sends the voltage pulse signal generated by the level generation circuit 603 to the selected X-plane insulated conducting wire. As explained above, energy from the voltage pulse signal is transferred to the Y-plane insulated conducting wires of the multi-touch sensing panel 602 by capacitive coupling.

The Y-plane insulated conducting wires are connected via the flexi-tail connector to one of a number of multiplexers A, B, C in a multiplexer array 605. Each multiplexer is connected to a receive circuit 606a, 606b, 606c. On the transmission of a voltage pulse signal on an X-plane insulated conducting wire, each multiplexer of the multiplexer array 605 is arranged to connect each Y-plane insulated conducting wire to which it is connected to the receive circuit 606a, 606b, 606c to which it is connected. The order in which the Y-plane insulated conducting wires are connected to the receive circuits 606a, 606b, 606c can be in any suitable order. In one example the level generation circuit 603 and multiplexer 604 sequentially send a voltage pulse signal on each X-plane conducting wire X₁ to Xs whilst each multiplexer of the multiplexer array 605 connects a first input A₁, B₁ C₁ to the corresponding receive circuits 606a, 606b, 606c. The level generation circuit 603 and multiplexer 604 then sequentially send a voltage pulse signal on each X-plane conducting wire X₁ to Xs whilst each multiplexer of the multiplexer array 605 connects to a second input A₂, B₂ C₂ to the corresponding receive circuits 606a, 606b, 606c. The level generation circuit 603 and multiplexer 604 then sequentially send a voltage pulse signal on each X-plane conducting wire X₁ to Xs whilst each multiplexer of the multiplexer array 605 connects a third input A₃ B₃ C₃ to the corresponding receive circuits 606a, 606b, 606c. In this way a complete scan of the multi-touch sensing panel is performed.

As will be understood, although the multi-touch sensing panel 602 shown in Figure 6 only includes 8 X-plane insulated conducting wire and 9 Y-plane insulated conducting wires, in most implementations there will be many more X-plane and Y-plane conducting wires (for example 80 X-plane insulated conducting wires and 48 Y-plane conducting wires). Accordingly it will be understood that in most implementations, each multiplexer of the multiplexer array 605 will have more than three Y-plane insulated conducting wire inputs and that the multiplexer 604 will have more than 8 output connections to X-plane insulated conducting wires.

Each receive circuit 606a, 606b, 606c comprises an amplifier 607, a peak detector 608, peak detector charge and discharge switches 609, 610 and an analogue to digital convertor 611.

When a receive circuit receives a voltage pulse signal, the signal is first amplified by the amplifier 607. The peak detector charge switch 609 is closed and the peak detector discharge switch 610 is opened and charge is collected by the peak detector 608. The peak detector charge switch 609 is then opened and the charge collected by the peak detector 608 is input to the analogue to digital convertor 611. The analogue to digital convertor 611 outputs a digital value corresponding to the voltage peak on the Y-plane insulated conducting wire. This is received by a microprocessor 612. The peak detector discharge switch 610 is then closed and the charge in the peak detector 608 is discharged. The peak detector charge and discharge switches 609, 610 are then re-set ready for the voltage pulse signal from the next Y-plane insulated conducting wire.

This process continues until the voltage pulse signal on each Y-plane insulated conducting wire has been measured and output as a digital value to the microprocessor 612. The multiplexer 604 then connects the level generation circuit 603 to the next X-plane insulated conducting wire. This process continues until a digital value has been sent to the microprocessor 612 for all of the intersection points of the multi-touch sensing panel 602.

Once all the digital values corresponding to the voltage pulse on each Y-plane insulated conducting wire have been input to the microprocessor 612, the microprocessor converts these values into a suitable format and then outputs multi-touch data corresponding to detected multiple user touches on the multi-touch sensing panel 602 on an output line 613. In some examples the multi-touch data simply comprises a series of data units, each data unit corresponds to one of the intersection points and includes two data values. A first data value identifies a given intersection point, and a second data value indicates an amount of energy from the voltage pulse that has been capacitively coupled across that particular intersection point.

In some examples the microprocessor performs further processing to refine the data received from the receive circuits. In some examples the microprocessor is arranged to identify which intersection points may have been subject to a user touch and then control the touch detector to perform another series of X-plane conductor pulsing focusing on those particular intersection points.

In some examples the touch detector unit is embodied in a discrete integrated circuit (IC) package. However, it will be understood that in other examples the components and functionality associated with the touch detector unit 601 are distributed within a larger system in any appropriate fashion.

In accordance with the invention, techniques are provided for producing a non-planar multi-touch sensing panel. Such a multi-touch sensing panel would be suitable for use with a corresponding, non-planar display screen.

In particular techniques for producing a non-planar multi-touch sensing panel include the steps of:
forming a plurality of electrically isolated conductors by laying down insulated conducting wire on an adhesive layer, said insulated conducting wire comprising an insulating coating (each of the electrically isolated conductors are thereby formed from individually isolated conducting wire);
forming a flexible conductor array sheet from the insulated conducting wires laid down on the adhesive layer, and
laminating the flexible conductor array sheet onto a non-planar protective substrate thereby forming the non-planar multi-touch sensing panel.

The insulated conducting wire is laid down on the adhesive layer such that the plurality of electrically isolated conductors cross each other at a plurality of intersection points, in keeping, for example, with the conductor array shown in Figure 2a.

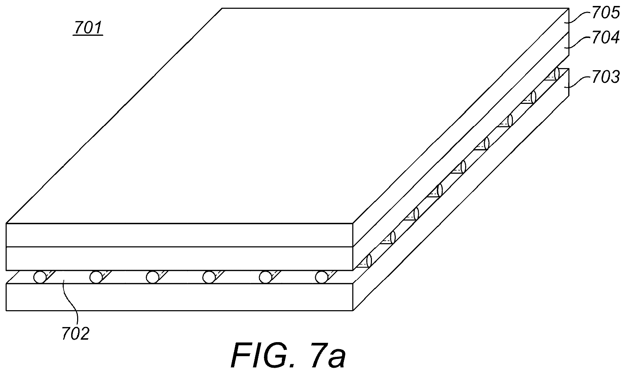

Figure 7a provides a schematic diagram of a flexible conductor array sheet 701 arranged in accordance with an example of the invention and that can be used to produce a non-planar multi-touch sensing panel.

The flexible conductor array sheet 701 comprises a conductor array layer 702 positioned on an adhesive layer 704.

The flexible conductor array sheet 701 further comprises a first protective film layer 703 positioned adjacent the conductor array layer 702 and a second protective film layer 705 positioned adjacent the adhesive layer 704. In some examples the first and second protective film layers 703, 705 each comprise a polyethylene terephthalate (PET) film. As will be understood the conductor array layer 702 can be positioned and fixed (i.e. laid down) on the adhesive layer 704 in accordance with the technique described with reference to Figure 5. In such an example, the base layer 501 described with reference to Figure 5 will typically comprise the second protective film layer 705 and the adhesive layer 704. It will be understood that the conductor array can be arranged in accordance with the conductor arrays described with reference to Figures 2a and 2c.

The conductive core and insulating coating of the insulated conducting wires of the conductor array layer typically comprise a metallic conductor such as copper, nickel or tungsten and with an insulating coating made from any suitable flexible insulating material such as polyurethane, polyester, polyesterimide or polyimide. The insulated conducting wires typically have dimensions as mentioned above with reference to Figure 3.

It will be understood that the term "non-planar" in the context of the present invention refers to surface configurations at least a portion of which are not substantially flat. Generally a non-planar multi-touch sensing panel can take any non-planar (i.e. non-flat) configuration provided the configuration of the protective substrate is such that it does not prevent a suitable flexible conductor array sheet being laminated to it. A non-planar element (e.g. "curve") of a non-planar multi-touch sensing panel can range from being only a slight deviation from a continuous flat surface (i.e. slightly curved) to a substantial deviation from a flat curve (i.e. highly curved).

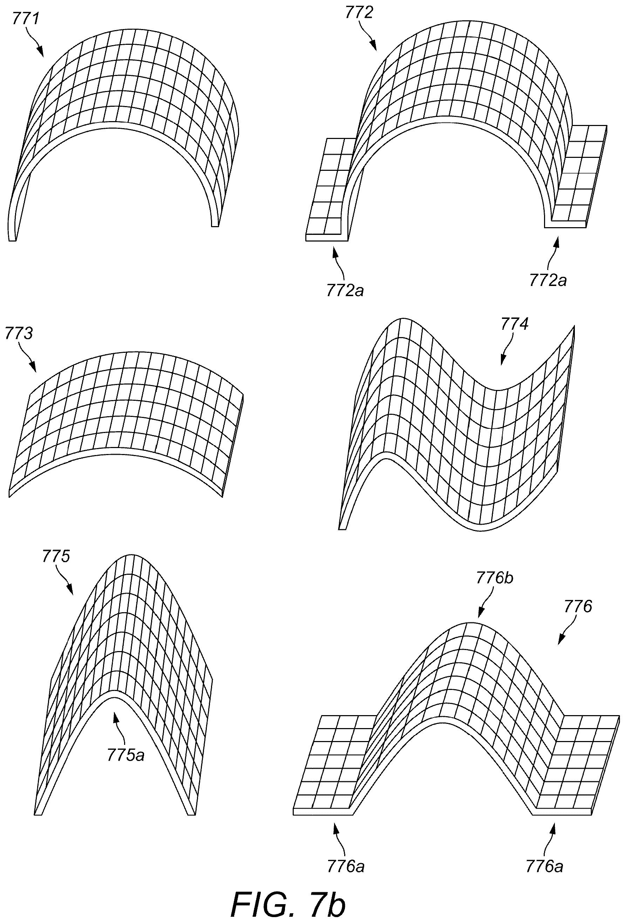

Figure 7b provides a schematic diagram showing a number of example configurations of non-planar multi-touch sensing panels in accordance with embodiments of the invention. In a first example configuration 771 a non-planar multi-touch sensing panel has a substantially curved configuration. In a second example configuration 772 a non-planar multi-touch sensing panel has a curved configuration corresponding to that of the first example but including two substantially planar portions 772a. In a third example configuration 773 a non-planar multi-touch sensing panel has a curved configuration with a curve that is less pronounced than the curved configuration of the first example configuration 771. In a fourth example configuration 774 a non-planar multi-touch sensing panel has a curved configuration defining a wave-like form. In a fifth example configuration of a non-planar multi-touch sensing panel a non-planar multi-touch sensing panel has a curved configuration in which the curve includes a pronounced point 775a at a zenith of the curve. In a sixth example configuration 776 of a non-planar multi-touch sensing panel includes two substantially planar portions 776a and a central curved portion 776b.

As will be understood, a conductor array fixed on an adhesive layer as described above as well as being transparent is also substantially flexible. In other words the array can be deformed to an extent away from a flat planar configuration without the insulated conducting wires breaking. The provision of the first and second protective layers in the flexible conductor array sheet help keep the conductor array in position and protects it whilst it is being manipulated during the manufacturing process.

To produce a non-planar multi-touch sensing panel a flexible conductor array sheet is laminated (i.e. applied in such a way that the flexible conductor array sheet adheres to the non-planar multi-touch sensing panel) onto a non-planar protective substrate such as a transparent polycarbonate, glass or acrylic substrate.

The technique used to laminate the flexible conductor array sheet onto the protective substrate is a rolling technique.

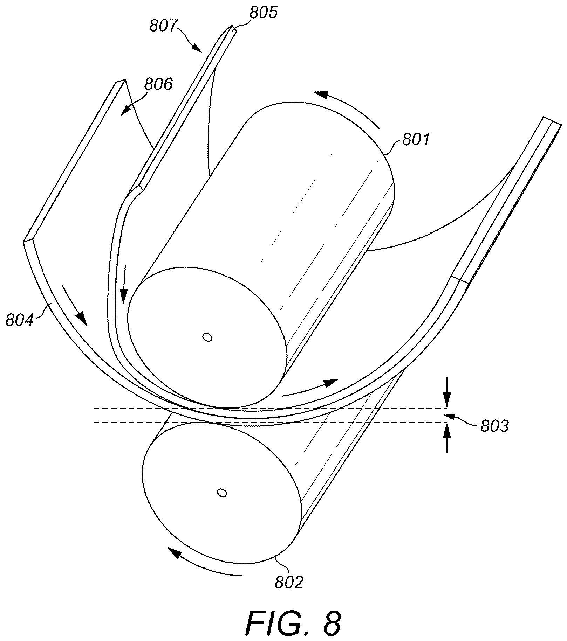

A schematic diagram showing an example of a rolling technique is provided in Figure 8.

Figure 8 shows a roller arrangement comprising a first roller 801 and second roller 802. The rollers are spaced apart by a gap 803. The first and second rollers 801, 802 of the roller arrangement are arranged to rotate in opposite directions. A curved transparent protective substrate 804 (made, for example, from glass, polycarbonate or acrylic) and a flexible conductor array sheet 805 (arranged, for example, in accordance with the conductor array sheet described with reference to Figure 7a) are drawn through the gap 803 between the rollers 801, 802. In one example, the curved transparent protective substrate 804 has an adhesive (such as PSA or OCA) previously applied to its inner surface 806. As the curved transparent protective substrate 804 and the flexible conductor array sheet 805 are drawn through the gap 803, the flexible conductor array sheet 805 is compressed against the curved transparent protective substrate 804 and bonded thereto by virtue of the adhesive on the inner surface 806 of the curved transparent protective substrate 804.

In other examples the flexible conductor array sheet 805 has an adhesive previously applied to its outer surface 807 in addition to, or instead of the adhesive being previously applied to the inner surface 806 of the curved transparent protective substrate 804.

In some examples one or both of the rollers 801, 802 are heated to aid the bonding of the flexible conductor array sheet 805 to the curved transparent protective substrate 804.

In some examples the roller arrangement is arranged so that the size of the gap 803 between the rollers 801, 802 can be varied to accommodate different thicknesses of the flexible conductor array sheet 805 and the curved transparent protective substrate 804.

In some examples in order to pre-apply an adhesive layer to the inner surface 806 of the curved transparent protective substrate 804, the curved transparent protective substrate 804 is passed through the rollers with an adhesive sheet which bonds to the inner surface 806 of the curved transparent protective substrate 804.

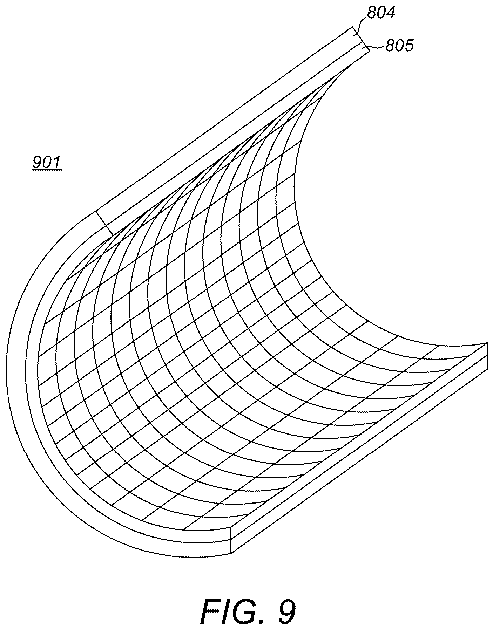

Figure 9 provides a schematic diagram of a non-planar multi-touch sensing panel 901 produced in accordance with the technique described with reference to Figure 8 comprising the flexible conductor array sheet 805 laminated onto the inner surface of the curved transparent protective substrate 804. The edges of the flexible conductor array sheet 805 and the curved transparent protective substrate 804 substantially correspond in Figures 8 and 9 although it will be understood that in some examples, the flexible conductor array sheet 805 is smaller in area than the transparent protective substrate 804 and therefore edges of the curved transparent protective substrate 804 will extend beyond the edges of the flexible conductor array sheet 805. Moreover, the signal lines and the termination point described above with reference to Figure 2a are not shown in the schematic diagram of the multi-touch sensing panel shown in Figure 9, however, it will be understood that these components are typically incorporated as part of the multi-touch sensing panel.

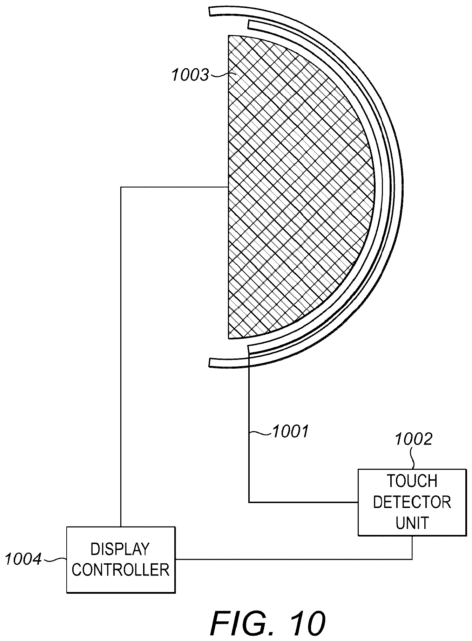

Figure 10 provides a schematic diagram of the non-planar multi-touch sensing panel 901 described with reference to Figure 9 connected via a flexi-tail connector 1001 to a touch detector unit 1002 and positioned relative to a suitably shaped non-planar display screen 1003. The non-planar display screen 1003 is coupled to and controlled by a display controller 1004. The touch detector unit 1002 is arranged to generate multi-touch data as described above (for example with reference to Figure 6) and send this to the display controller 1004.

The term "multi-touch sensing" in the context of a multi-touch sensing arrangements and multi-touch sensing displays generally refers to arrangements and devices including a conductor array of X-plane conductors and Y-plane conductors from which information about multiple user touches can be derived using the mutual capacitance based techniques as described above. However, it will be understood that the term "multi-touch sensing" also refers to touch sensing arrangements that include a conductor array as described above and from which touch information can be derived using the mutual capacitance based techniques but that are adapted to only provide output touch information relating to a single user touch at any one time. For example, multi-touch sensing panel arrangements may be provided as shown in Figure 1 or 10 except that the touch detector unit is adapted to only provide an output corresponding to a single detected user touch. In other words, in the context of the invention "multi-touch sensing" refers to detecting one or more user touches at the same time.

Various modifications can be made to the invention. In the examples described above, a method of manufacturing a non-planar multi-touch sensing panel includes using a direct wire plotting technique to fix the insulated conducting wires to an adhesive layer thereby forming a flexible conductor array sheet which can be laminated to a non-planar protective substrate.

It will be understood that the particular component parts of which the various arrangements described above are comprised are in some examples logical designations. Accordingly, the functionality that these component parts provide may be manifested in ways that do not conform precisely to the forms described above and shown in the diagrams. For example aspects of the invention, particularly the processes running on the touch detector may be implemented in the form of a computer program product comprising instructions (i.e. a computer program) that may be implemented on a processor, stored on a data sub-carrier such as a floppy disk, optical disk, hard disk, EPROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable or bespoke circuit suitable to use in adapting the conventional equivalent device.

## Claims

1. A method of producing a non-planar multi-touch sensing panel, said panel comprising a plurality of electrically isolated conductors crossing each other at a plurality of intersection points, said method comprising:
forming the plurality of electrically isolated conductors by laying down insulated conducting wire on an adhesive layer, said insulated conducting wire comprising an insulating coating;
forming a flexible conductor array sheet from the insulated conducting wires laid down on the adhesive layer,
**characterized in that**:
the method further comprises the step of laminating the flexible conductor array sheet onto a non-planar protective substrate using a rolling technique thereby forming the non-planar multi-touch sensing panel.

2. A method according to claim 1, wherein the adhesive layer is on a first flexible substrate.

3. A method according to claim 2, comprising forming the flexible conductor array sheet by positioning a second flexible substrate on the plurality of electrically isolated conductors.

4. A method according to any previous claim, wherein the plurality of electrically isolated conductors comprise a first group of X-plane conductors and a second group of Y-plane conductors, each intersection point being where an X-plane conductor crosses a Y-plane conductor, and
the step of laying down the insulated conducting wire comprises firstly laying down the conducting wire for one or the X- plane conductors or the Y-plane conductors, then secondly laying down the conducting wire for the other of the X- plane conductors and Y-plane conductors.

5. A method according to any previous claim, wherein the laying down of the insulated conducting wire is by a direct wire plotting process.

6. A method according to any previous claim, wherein laminating the flexible conductor array sheet onto the non-planar protective substrate using a rolling technique comprises passing the non-planar protective substrate and the flexible conductor array sheet between a first and second pinch roller, and wherein the first and second pinch rollers are heated.

7. A method according to claim 6, wherein either one or both of the non-planar protective substrate and the flexible conductor array sheet include a pre-applied adhesive to a surface on which the lamination occurs.

8. A method according to claim 6 or 7, wherein a gap between the first and second pinch rollers is adjustable to accommodate for different thickness of the non-planar protective substrate and the flexible conductor array sheet.

## Patentansprüche

1. Verfahren zum Herstellen einer nicht planaren Mehrfachberührungserfassungsplatte, wobei die Platte eine Vielzahl von elektrisch isolierten Leitern umfasst, die einander an einer Vielzahl von Schnittpunkten kreuzen, wobei das Verfahren umfasst:
Bilden der Vielzahl von elektrisch isolierten Leitern durch Ablegen eines isolierten Leitungsdrahts auf einer Klebeschicht, wobei der isolierte Leitungsdraht eine isolierende Beschichtung umfasst;
Bilden eines flexiblen Leiteranordnungsbogens aus den isolierten Leitungsdrähten, die auf der Klebeschicht abgelegt sind,
**dadurch gekennzeichnet, dass**:
das Verfahren ferner den Schritt eines Laminierens des flexiblen Leiteranordnungsbogens auf ein nicht planares Schutzsubstrat unter Verwendung einer Rolltechnik umfasst, wodurch die nicht planare Mehrfachberührungserfassungsplatte gebildet wird.

2. Verfahren nach Anspruch 1, wobei sich die Klebeschicht auf einem ersten flexiblen Substrat befindet.

3. Verfahren nach Anspruch 2, umfassend Bilden des flexiblen Leiteranordnungsbogens durch Positionieren eines zweiten flexiblen Substrats auf der Vielzahl von elektrisch isolierten Leitern.

4. Verfahren nach einem vorhergehenden Anspruch, wobei die Vielzahl von elektrisch isolierten Leitern eine erste Gruppe von X-Ebenen-Leitern und eine zweite Gruppe von Y-Ebenen-Leitern umfasst, wobei jeder Schnittpunkt dort ist, wo ein X-Ebenen-Leiter einen Y-Ebenen-Leiter kreuzt, und
der Schritt des Ablegens des isolierten Leitungsdrahts zuerst Ablegen des Leitungsdrahts für einen von den X-Ebenen-Leitern oder Y-Ebenen-Leitem, dann als zweites Ablegen des Leitungsdrahts für den anderen der X-Ebenen-Leiter und Y-Ebenen-Leiter umfasst.

5. Verfahren nach einem vorhergehenden Anspruch, wobei das Ablegen des isolierten Leitungsdrahts durch ein direktes Drahtauftragsverfahren erfolgt.

6. Verfahren nach einem vorhergehenden Anspruch, wobei das Laminieren des flexiblen Leiteranordnungsbogens auf das nicht planare Schutzsubstrat unter Verwendung einer Rolltechnik Hindurchführen des nicht planaren Schutzsubstrats und des flexiblen Leiteranordnungsbogens zwischen einer ersten und einer zweiten Andruckrolle umfasst, und wobei die erste und die zweite Andruckrolle beheizt werden.

7. Verfahren nach Anspruch 6, wobei entweder das nicht planare Schutzsubstrat oder der flexible Leiteranordnungsbogen oder beide einen vorab auf eine Oberfläche, auf der die Laminierung erfolgt, aufgebrachten Klebstoff enthalten.

8. Verfahren nach Anspruch 6 oder 7, wobei ein Spalt zwischen der ersten und der zweiten Andruckrolle einstellbar ist, um eine unterschiedliche Dicke des nicht planaren Schutzsubstrats und des flexiblen Leiteranordnungsbogens auszugleichen.

## Revendications

1. Procédé de production d'un panneau de détection tactile multipoint non plat, ledit panneau comprenant une pluralité de conducteurs isolés électriquement se croisant les uns les autres au niveau d'une pluralité de points d'intersection, ledit procédé comprenant :
la formation de la pluralité de conducteurs électriquement isolés en déposant un fil métallique conducteur isolé sur une couche adhésive, ledit fil métallique conducteur isolé comprenant un revêtement isolant ;
la formation d'une feuille de réseau de conducteurs souples à partir des fils conducteurs isolés déposés sur la couche adhésive,
**caractérisé en ce que** :
le procédé comprend en outre l'étape de stratification de la feuille de réseau de conducteurs souples sur un substrat protecteur non plat à l'aide d'une technique de stratification, formant ainsi le panneau de détection tactile multipoint non plat.

2. Procédé selon la revendication 1, ladite couche adhésive étant sur un premier substrat souple.

3. Procédé selon la revendication 2, comprenant la formation de la feuille de réseau de conducteurs souples en positionnant un second substrat souple sur la pluralité de conducteurs électriquement isolés.

4. Procédé selon une quelconque revendication précédente, ladite pluralité de conducteurs électriquement isolés comprenant un premier groupe de conducteurs du plan X et un second groupe de conducteurs du plan Y, chaque point d'intersection étant l'endroit où un conducteur du plan X croise un conducteur du plan Y, et
l'étape de pose du fil métallique conducteur isolé comprenant d'abord la pose du fil métallique conducteur pour un ou les conducteurs du plan X ou les conducteurs du plan Y, ensuite la pose du fil métallique conducteur pour l'autre des conducteurs du plan X et des conducteurs du plan Y.

5. Procédé selon une quelconque revendication précédente, ladite pose du fil métallique conducteur isolé se faisant par un processus de traçage direct de fil métallique.

6. Procédé selon une quelconque revendication précédente, ladite stratification de la feuille de réseau de conducteurs souples sur le substrat protecteur non plat à l'aide d'une technique de stratification comprenant le passage du substrat protecteur non plat et de la feuille de réseau de conducteurs souples entre un premier et un second galet presseur, et lesdits premier et second galets presseurs étant chauffés.

7. Procédé selon la revendication 6, soit l'un soit les deux du substrat protecteur non plat et de la feuille de réseau de conducteurs souples comprenant un adhésif pré-appliqué sur une surface sur laquelle la stratification se produit.

8. Procédé selon la revendication 6 ou 7, un espace entre les premier et second galets presseurs étant réglable pour s'adapter à différentes épaisseurs du substrat protecteur non plat et à la feuille de réseau de conducteurs souples.
